# EUROPEAN PATENT APPLICATION

(11) **EP 2 090 963 A1**
(43) Date of publication of application: **19.08.2009**
(21) Application number: 07832645.1
(22) Date of filing: 28.11.2007
(51) Int. Cl.: G06F 3/033

(54) **THREE-DIMENSIONAL MOTION INPUT DEVICE**

(30) Priority: 04.12.2006 JP 2006326791
(71) Applicant: Shima Seiki Manufacturing., Ltd., Wakayama-shi, Wakayama 6410003 (JP)
(72) Inventor: SHIMA, Mitsuhiro, Wakayama-shi Wakayama 641-0003 (JP); FUKUDA, Yoshihiko, Wakayama-shi Wakayama 641-0003 (JP); NAKASHIMA, Masahiro, Wakayama-shi Wakayama 641-0003 (JP)
(74) Representative: Wagner, Karl H.
(86) International application number: PCT/JP2007/072923
(87) International publication number: WO 2008/069068

(57) **Abstract**

An annular groove (10) is formed in the top face of a case (4) of a motion commander (2), and a ring (14) for inputting three-dimensional motion and a track ball (16) are arranged in the annular groove (10). Two-dimensional motion is inputted using the trackball (16), and three-dimensional motion in four degrees of freedom, excluding the two-dimensional motion, is inputted by operating the ring (14). Three-dimensional motion can thus be inputted easily.

## Description

The present invention relates to a three-dimensional motion input device.

Patent document 1 (JP 4-57202 B) discloses the feature of providing slits in a ring and detecting the orientation of the slits by detecting light passing through the slits. Allowing the ring to move in three dimensions relative to the base makes it possible to detect three-dimensional motion of the ring with six degrees of freedom, by way of six slits, and to input three-dimensional motion. However, it is difficult to input motion into the ring while being aware of the six degrees of freedom. When the target is to be displaced horizontally wilthout rotation, for instance, it is difficult to impart to the ring only movement corresponding to a horizontal displacement without imparting movement corresponding to a rotation. The inventors arrived at the present invention as a result of study into a three-dimensional motion input device that allows easy input of motion in six degrees of freedom.

Patent document 1: JP 4-57202 B

A problem of the invention is to facilitate input of three-dimensional motion, and in particular, to allow separate input of movement within a predetermined plane and input of movement outside that plane, or rotation within that plane.

The present invention is three-dimensional motion input device comprising a ring, supported on a base by a spring, and operable by a user; three-dimensional motion detection means for detecting displacements of the ring relative to the base in four degrees of freedom; and two-dimensional input means, provided in the central portion of the ring, for inputting two-dimensional translational motion. Hereinafter, three-dimensional motion will be abbreviated to 3D motion, three-dimensional will be abbreviated to 3D and two-dimensional will be abbreviated to 2D.

Preferably, the 2D input means is a trackball.
Preferably, the 3D motion detection means detects translation other than the 2D motion on the basis of pushing and pulling of the ring relative to the base, detects rotations in two degrees of freedom on the basis of the tilt of the ring relative to a top face of the base, and detects rotation in the remaining one degree of freedom in 3D space on the basis of rotation about the central axis of the ring.

Preferably, there is provided a switch for disabling input from the 2D input means.

Preferably, the 3D motion detection means is provided with a magnet in one of the ring and the base, and with a Hall element in the other one of the ring and the base, and detects displacements of the ring relative to the base on the basis of the positional relationship between the Hall element and the magnet.

Among 3D motion in six degrees of freedom, 2D translation within one plane is inputted in the present invention by way of a 2D input means, while movement in the other four degrees of freedom is inputted by way of a ring that surrounds the 2D input means. Input is easy, in particular input of simple translations that involve no rotation, since movement in six degrees of freedom is not inputted by way of one single ring. Also, input of 2D motion can be carried out by way of the 2D input means in the center of the ring. Therefore, input of 2D motion can be carried out separately from other inputs, with the hand remaining at the same position and moving only slightly.

By using a trackball as the 2D input means, 2D motion can be inputted by rotating the ball in the ring using, for instance, the palm of the hand.
In the assignment of 3D motion in four degrees of freedom, pushing and pulling of the ring relative to the base is assigned to translation other than 2D motion, whereupon translation in the remaining one degree of freedom can be inputted by way of a translational operation. Also, detecting rotations in two degrees of freedom based on the tilt of the ring relative to the top face of the base allows detecting rotations in two degrees of freedom based on rotation relative to two axes parallel to the base. Also, rotation of the ring can be naturally assigned to rotation in the 3D space by using rotation around the center of the ring.

The 2D input means is sometimes touched during operation of the ring. However, providing a switch for disabling 2D input allows preventing the occurrence of problems caused by touching of the 2D input means during operation of the ring.
A combination of known LEDs, slits and PSDs (position detectors) may be used as the 3D motion detection means. However, arranging the ring and LEDs or the like around the ring in a compact manner causes the resolution of 3D motion to become coarser. Changes in, for instance, the gap between the ring and the base can be therefore detected with high resolution by providing a Hall element in one among the ring and the base and a magnet in the other among the ring and the base.

Fig. 1 is a plan-view diagram of a motion commander of an embodiment;
Fig. 2 is a side-view diagram of the motion commander of the embodiment;
Fig. 3 is a cross-sectional diagram of the motion commander of the embodiment along direction III-III;
Fig. 4 is a bottom-view diagram of the motion commander of the embodiment;
Fig. 5 is a diagram illustrating schematically the motion commander of the embodiment when in use;
Fig. 6 is a plan-view diagram of the relevant portion of the motion commander in a modification;
Fig. 7 is a plan-view diagram of the relevant portion of the motion commander in a second modification;
Fig. 8 is a plan-view diagram of the relevant portion of a 3D input unit of the motion commander of the embodiment;
Fig. 9 is a diagram illustrating schematically a detection mechanism of vertical motion of the motion commander of the embodiment;
Fig. 10 is a diagram illustrating schematically a detection mechanism of 2D motion of the motion commander of the embodiment;
Fig. 11 is a diagram illustrating schematically a modification in which vertical motion and 2D motion are detected simultaneously;
Fig. 12 is a diagram illustrating schematically a modification of the detection mechanism of vertical motion;
Fig. 13 is a diagram illustrating schematically a modification of the detection mechanism of 2D motion;
Fig. 14 is a diagram illustrating schematically a trackball in the embodiment;
Fig. 15 is a diagram illustrating the motion commander of the embodiment and an external accessory circuit;
Fig. 16 is a diagram illustrating schematically γ correction in the embodiment; and
Fig. 17 is a block diagram of a knit design device using the motion commander of the embodiment.

- 2: motion commander
- 4: case
- 5: upper case
- 6: lower case
- 8: palm rest
- 10: groove
- 12: recess
- 12a to d: inclined surface
- 13a to c: flat surface
- 14: ring
- 16: trackball
- 18: peripheral section
- 20, 22: keyboard
- 26: spring
- 28: pin
- 30: base plate
- 32: ring
- 34: pad
- 35: hole
- 36: LED
- 38, 39: slit
- 40: PSD
- 41: slit
- 50, 51: Hall element
- 52: magnet
- 56, 57: roller
- 60: accessory circuit
- 61: motion calculator
- 62 γ: corrector
- 63: interface
- 70: knit design device
- 71: keyboard
- 72: color monitor
- 73: printer
- 80: knit design unit
- 81: data converter
- 82 3D: simulation unit

A preferred embodiment for carrying out the invention is explained in detail below. The invention, however, is in no way limited to or by the embodiment.

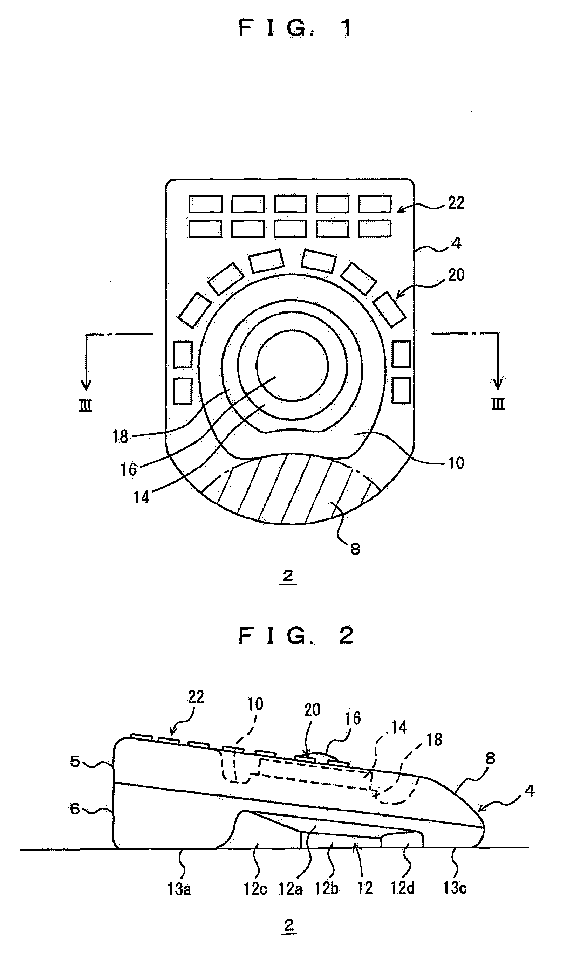

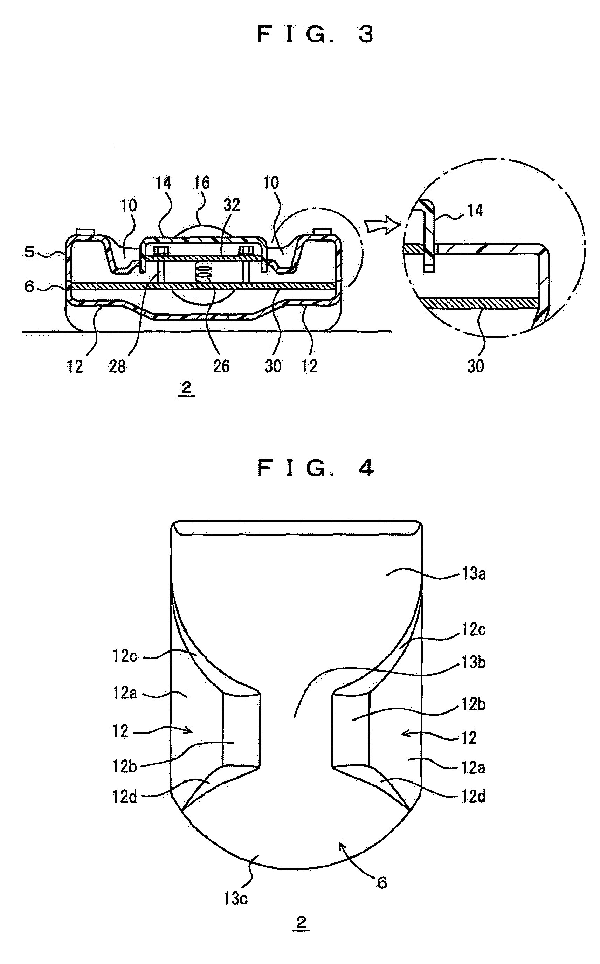

Figs. 1 to 17 illustrate a motion commander 2 of the embodiment as well as modifications thereof The motion commander 2, which is used for 3D motion input, has a case 4 comprising an upper case 5 and a lower case 6. Hereafter, the lower side in Fig. 1 will be referred to as the near side, the upper side will be referred to as the leading end, and left right in Fig. 1 will be referred to as left and right. The motion commander 2 slants in such a manner that the height thereof increases from the near side towards the leading end. The inclined surface rising from the near side edge constitutes a palm rest 8. Contiguous to the palm rest 8 there are an annular groove 10 at the middle of the top face of the case and recesses 12 at both side faces of lower case 6. The reference numerals 12a to 12d denote inclined surfaces of the recesses 12. The bottom face of the lower case 6 comprises, for instance, flat surfaces 13a to 13c illustrated in Fig. 4, among which the flat surface 13b may be omitted.

The reference numeral 14 denotes a ring the top face of which is parallel to the top face of the upper case 5, the reference numeral 16 denotes a trackball, and the reference numeral 18 denotes a peripheral section. All these are provided, for instance concentrically, within a groove 10. The peripheral section 18 is raised relative to the groove 10, and the ring 14 is raised relative to the peripheral section 18. The apex surface of the trackball 16 stands at a higher position than the top face of the ring 14. The top face of the ring 14 stands at substantially the same height as the top face of the surrounding upper case 5. As illustrated on the right of Fig. 3, the groove 10 may be omitted and the ring 14 may rise directly from the top face of the surrounding case.

The reference numerals 20 and 22 denote respective keyboards, having each a set of keys arrayed thereon. The keyboard 20 surrounds the groove 10, while the keyboard 22 is disposed at the leading end side of the upper case 5. The keyboard 20 comprises keys for inputting instructions directly linked to the operation of the ring 14 and the trackball 16, for instance disabling of input from the trackball 16, disabling of input from the ring 14, canceling of an immediately previous input, and modification of the sensitivity of the trackball 16 or the ring 14. These keys are the keys ordinarily used in the process of inputting 3D motion via the ring 14 and the trackball 16. By contrast, the keyboard 22 has arranged thereon keys that are used less frequently, as well as keys for menu display, function calling or the like that are not directly linked to input via the trackball 16 and the ring 14.

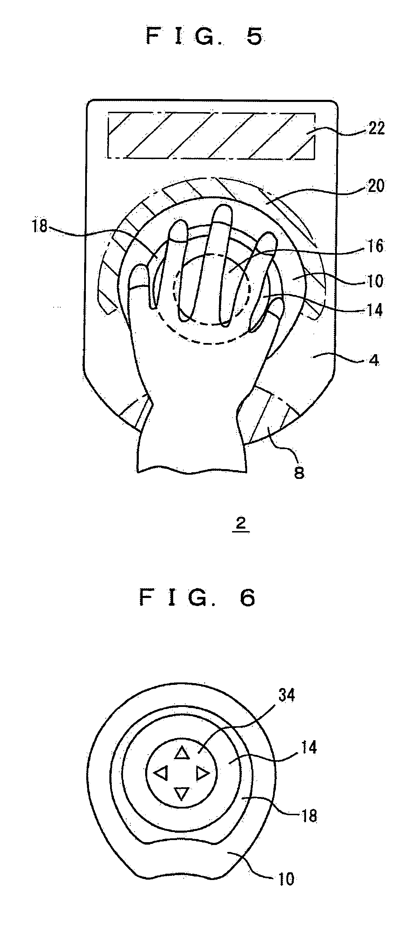

In the usage example of the motion commander 2 illustrated in Fig. 5, the palm of the hand is supported on the palm rest 8 and the fingertips rest in the groove 10. The ring 14 is operated with the fingers, and the trackball 16 is operated, for instance, with the palm of the hand. The fingers need only reach forward slightly to touch the keyboard 20. The ring 14 can be operated by inserting the fingers into the groove 10 that surrounds the ring 14. The groove 10 allows thus keeping the height of the trackball 16 and the ring 14 low, while preventing the palm of hand or the like from touching the trackball 16 or the ring 14 when instructions are inputted via the keyboard 20. The size of the hand depicted in Fig. 5 has been slightly reduced.

The motion commander 2 can be carried about easily, without dropping, by grabbing with the fingers the recesses 12 provided at both side faces of the lower case 6.

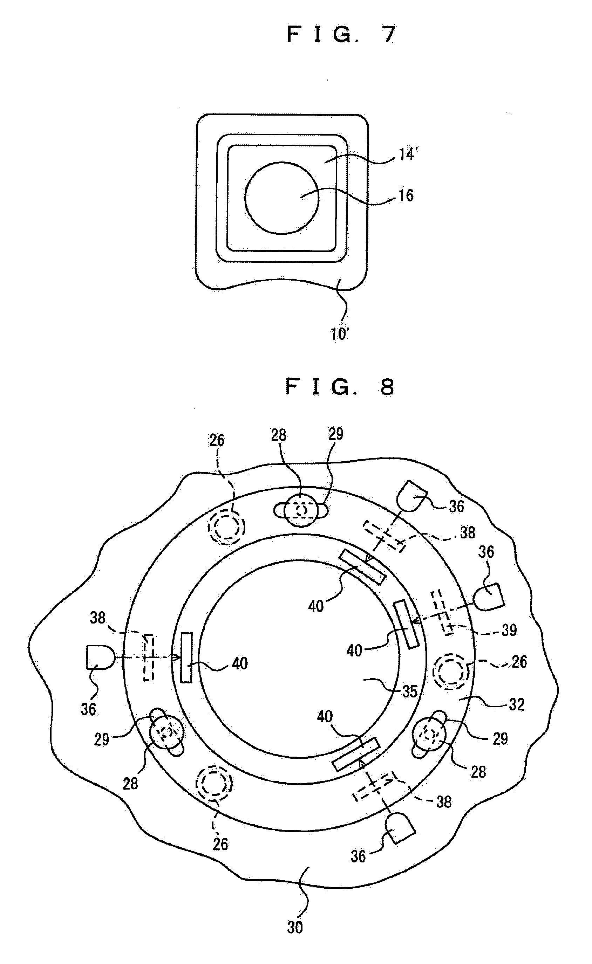

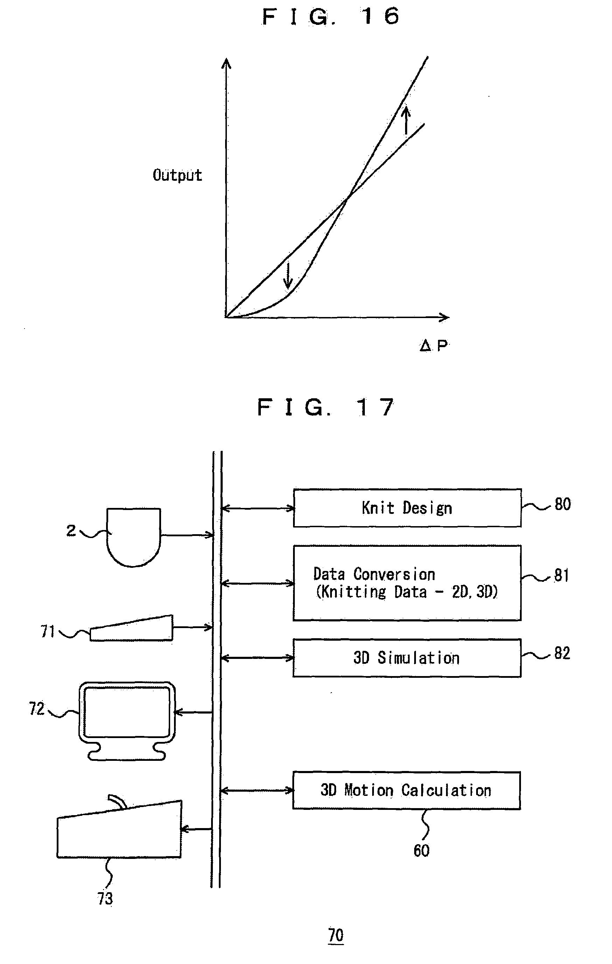

In the present embodiment, the trackball 16 is used for inputting translational motion within a predetermined plane, i.e. for inputting x-direction motion and y-direction motion. The trackball 16 can be operated using the palm of the hand, at the same position as when the fingertips are in the groove 10. The predetermined plane is, for instance, the screen of a color monitor 72 of the knit design device of Fig. 17. However, other input means can be used as the 2D motion input means itself. For instance, 2D translational motion can be inputted by touching the four sides, front, rear, left and right, of a pad 34 illustrated in Fig. 6. The ring 14 is depicted as circular, but may also be polygonal or the like, as the ring 14' illustrated in Fig. 7.

Fig. 8 to Fig. 11 illustrate detection of 3D motion in four degrees of freedom using a ring 32. A base ring 32, mounted under the plastic ring 14, is supported by, for instance, springs 26 at three sites, on a base plate 30 that is fixed to the case 4. The reference numeral 28 denotes pins, having one end fixed to the base plate 30, and running through long holes 29 of the ring 32. The pins 28 limit the displacement range of the ring 32. A hole 35 provided in the base plate 30 allows housing the trackball 16. LEDs 36 and PSDs (position detectors) 40 are provided, opposing each other, at for instance four sites of the base plate 30, around the ring 32. Slits 38, 39 are provided in the ring 32 in such a manner so as to be positioned between the LEDs 36 and the PSDs 40.

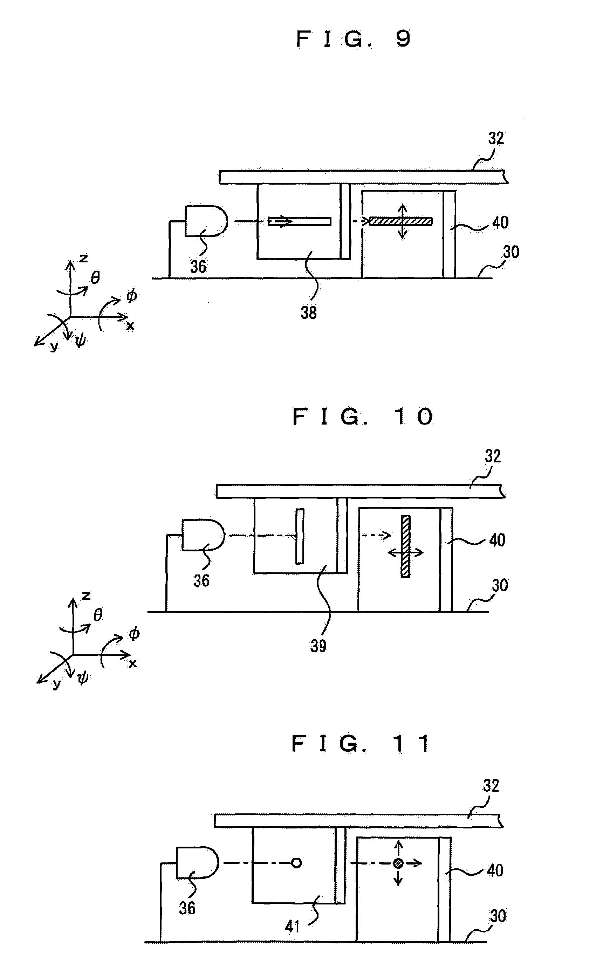

When the ring 32 moves, beams from the LEDs 36 move up and down across the slits 38 for 3D motion detection. This motion is detected by the PSDs 40, as illustrated in Fig. 9.
The slit 39 detects rotation θ round the z-axis, which denotes the height direction. When the ring 32 is rotated about the z-axis, the beam of LED light passing through the slit 39 moves to the left and right relative to the PSD 40, as illustrated in Fig. 10. Movement in the θ direction can be detected thereby.

Motion in four degrees of freedom in a total of three dimensions can be detected by providing the slits 38 at three sites and the slit 39 at one site. The signals from the four PSDs 40 can be arbitrarily mapped to motion in four degrees of freedom. For instance, pulling or pushing of the ring 32 in the z-axis direction is associated with motion in the z-axis direction. Turning of the ring 32 about the z-axis is associated with rotation θ about the z-axis. The operation of the ring 32 and the type of motion inputted can be naturally mapped by associating tilting of the ring 32 along the x-axis direction to rotation φ about the y-axis, and associating tilting of the ring 32 along the y-axis to rotation φ about the x-axis. 2D motion, i.e. motion in the xy direction can be detected by the trackball 16. 3D motion with six degrees of freedom can thus be detected as described above.

Although in the present embodiment four LEDs 36 are used, light from one single LED may also be supplied to the four slits 38, 39 by way of, for instance, an optical fiber. The shape of the slits is arbitrary. There can be used, for instance, a slit 41 provided with a pinhole, as illustrated in Fig. 11, such that motion in two directions is detected by means of one slit 41.

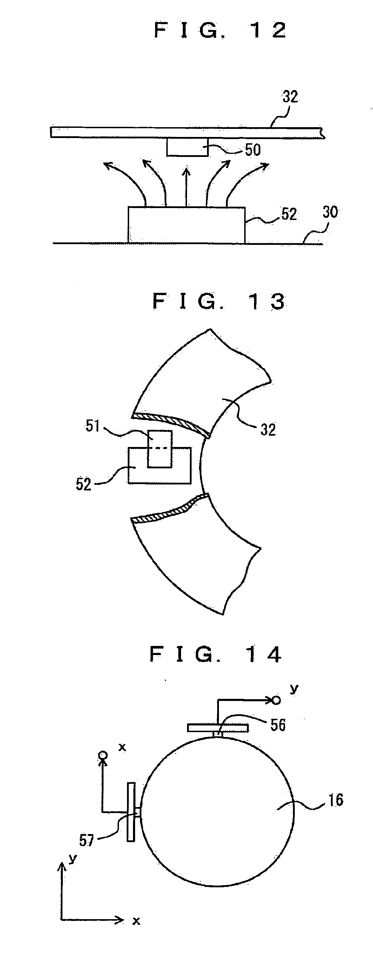

The position of the beams at the PSDs 40 changes substantially, even for a slight displacement of the ring 32, when the gap between the slits 38, 39 and the LEDs 36 is narrow on account of the compact construction of the motion commander 2. As a result, it is difficult to input fine 3D motion. Figs. 12 and 13 illustrate an example in which this issue is improved. The reference numerals 50 and 51 in Figs. 12 and 13 denote Hall elements, and the reference numeral 52 denotes a magnet, which may be a permanent magnet or an electromagnet. When the Hall element 50 in Fig. 12 comes close to or moves away from the magnet 52, the magnetic field acting on the Hall element 50 changes, which allows detecting the height of the Hall element 50 relative to the magnet 52. When part of the Hall element 51 is above the magnet 52 in Fig. 13, and the ring 32 is turned about the z-axis, there changes the surface area of the portion of the Hall element 51 that overlaps with the magnet 52. This allows detecting the rotation angle θ about the z-axis. The Hall elements and the LEDs can be used concomitantly. For instance, the rotation angle θ of the ring 32 about the z-axis may be detected by the slit 39, the LED 36 and the PSD 40 of Fig. 10, while tilting of the ring 32 (rotation about the x-axis and/or the y-axis), as well as translational movement in the z-axis direction (movement perpendicular to the top face of the case 4) may be detected by the Hall element 50 of Fig. 12.

Fig. 14 illustrates detection of x, y-direction motion by the trackball 16. The reference numerals 56, 57 denote rollers by way of which the rotation of the trackball 16 in the x-direction and the y-direction is detected.

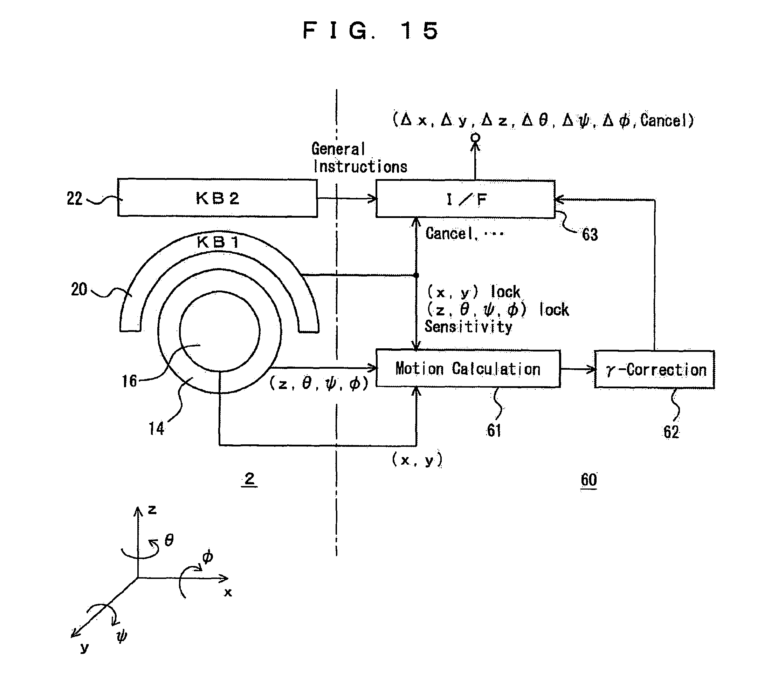

Fig. 15 illustrates an accessory circuit 60 to the motion commander 2. The reference numeral 61 denotes a motion calculator, into which there is inputted motion in the z, θ, ϕ and ψ directions by the ring 14, and into which there is inputted motion in the x, y-directions by the trackball 16. Signals for, for instance, locking the trackball 16 to disable input of the x-direction and the y-direction, locking the ring 14 to disable 4-degree of freedom input by the ring 14, or for changing the sensitivity in the trackball 16 and/or the ring 14 are also inputted into the motion calculator 61 from the keyboard 20. On the basis of these signals, the motion calculator 61 detects trigonometrically the coordinate changes of the six degrees of freedom x, y, z, θ, ϕ, ψ. In particular, providing the keyboard 20 with a key for disabling input by the trackball 16 prevents the occurrence of problems caused by erroneous touching of the trackball 16 in order to operate the ring 14.

In the movement determined by trigonometry, displacement in the ring 14 and the trackball 16 is proportional to the extent of 3D motion. When the ring 14 and the trackball 16 are operated slightly, sensitivity is preferably reduced, to eliminate errors caused by accidental touching of the trackball 16 and the ring 14, and to enable input of fine 3D motion. It is also preferable to simplify input of large motions when the trackball 16 and the ring 14 are operated significantly, which corresponds to input of large 3D motion. Such correction is carried out by way of a γ corrector 62, in such a manner that when a 3D coordinate determined trigonometrically changes by ΔP, the output is made non-linear by being reduced at a region where ΔP is small, and by being increased at a region where ΔP is large, as illustrated in Fig. 16. An interface 63 outputs to the exterior the input from the keyboards 20, 22 as well as the output from the γ corrector 62. For instance, the keyboard 20 has a key for canceling immediately preceding inputs. The interface 63 outputs a notification to that effect when such a key is operated.

Fig. 17 illustrates a knit design device 70 using the motion commander 2. The reference numeral 71 denotes a keyboard, 72 a color monitor and 73 a printer. A knit design unit 80 designs various knitted articles, in particular garments, on the basis of the inputs from the motion commander 2, the keyboard 71 and so forth. Design data on a knitted article is converted between knitting data and 2D or 3D simulation data by a data converter 81. A 3D simulator 82 generates a 3D image, that is worn by a dummy or the like, simulated based on knitting data. In 3D simulation it is advantageous to be able, for instance, to change the point of view relative to the worn knitted article, on the color monitor, to move the dummy, and to change the posture of the dummy. 3D motion must be inputted to that end. This is done using the motion commander 2, whereby the obtained 3D simulation image is displayed in real time on the color monitor 72 and is outputted, as a hard copy, in the printer 73.

The present embodiment affords the following effects.
(1) 2D translational motion is inputted by way of the trackball 16, while 3D motion in four degrees of freedom, excluding the 2D translational motion, is inputted by way of the ring 14. 3D motion is inputted easily as a result. In particular, input of movement in six degrees of freedom is no longer bothersome, as is the case when using only one ring 14.
(2) The trackball 16 is an extremely handy tool for inputting motion in the xy-direction. Also, motion in four degrees of freedom can be inputted in a simple manner by mapping the four types of motion of the ring 14, namely tilt in the x-direction, tilt in the y-direction, pushing and pulling of the ring 14 and turning of the ring 14, to 4-degree of freedom movements in 3D motion.
(3) During operation of the motion commander 2, the palm of the hand is supported on the palm rest 8, wile the fingertips are kept in the groove 10. The trackball 16 can be operated then with the palm of the hand. 3D motion can be inputted easily by closing the fingers to grasp the ring 14. The keyboard 20 can be operated by extending the fingers. This allows performing inputs that are intimately involved in the input of 3D motion, such as locking of the trackball 16, canceling of an immediately previous input, or sensitivity modification.
(4) The recesses 12 are provided at both side faces of the lower case 6, and hence the motion commander 2 can be grabbed with ease.
(5) The top face of the trackball 16 protrudes slightly beyond then top face of the upper case 5. As a result, the trackball 16 does not hinder access to the keyboard 20.

In the present embodiment, the motion commander 2 is used in the knit design device 70, but may also be used, for instance, in other appropriate CAD or 3D simulation.

## Claims

1. A three-dimensional motion input device (2), **characterized by** comprising:
a ring (14), supported on a base (30) by a spring (26), and operable by a user; three-dimensional motion detection means (32) for detecting displacements of said ring (14) relative to the base (30) in four degrees of freedom; and two-dimensional input means (16), provided in the central portion of said ring (14), for inputting two-dimensional translational motion.

2. The three-dimensional motion input device (2) according to claim 1, **characterized in that** said two-dimensional input means (16) is a trackball.

3. The three-dimensional motion input device (2) according to claim 2, **characterized in that** said three-dimensional motion detection means (32) detects translation other than said two-dimensional motion on the basis of pushing and pulling of said ring (14) relative to the base (30), detects rotations in two degrees of freedom on the basis of the tilt of the ring (14) relative to a top face of the base (30), and detects rotation in the remaining one degree of freedom in three-dimensional space on the basis of rotation about the central axis of the ring (14).

4. The three-dimensional motion input device (2) according to claim 1, **characterized in that** a switch for disabling input from said two-dimensional input means (16) is provided.

5. The three-dimensional motion input device (2) according to claim 1, **characterized in that** said three-dimensional motion detection means (32) is provided with a magnet (52) in one of the ring (14) and the base (30), and with a Hall element (50, 51)in the other one of the ring (14) and the base (30), and detects displacements of the ring (14) relative to the base (30) on the basis of the positional relationship between the Hall element (50, 51) and the magnet (52).
